(19) Europäisches Patentamt / European Patent Office / Office européen des brevets

(11) EP 4 664 331 A1

(12) EUROPEAN PATENT APPLICATION
published in accordance with Art. 153(4) EPC

(43) Date of publication:
17.12.2025 Bulletin 2025/51

(51) International Patent Classification (IPC):
G06F 21/55 (2013.01)        G06F 21/62 (2013.01)
G06F 21/57 (2013.01)        G06N 5/04 (2023.01)

(21) Application number: 24753700.4

(52) Cooperative Patent Classification (CPC):
G06F 21/55; G06F 21/57; G06F 21/62; G06N 5/04

(22) Date of filing: 05.02.2024

(86) International application number:
PCT/KR2024/095078

(87) International publication number:
WO 2024/167379 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.02.2023 KR 20230015618

(71) Applicants:
• Yoongnet Inc.
  Seoul 06965 (KR)
• Hong, Ki Yoong
  Seoul 06966 (KR)

(72) Inventors:
• HONG, Paul
  Seoul 06966 (KR)
• HONG, Seung Eun
  Seoul 06598 (KR)
• HONG, Pyeong Kang
  Seoul 06966 (KR)
• HONG, Ki Yoong
  Seoul 06966 (KR)

(74) Representative: Jung, Minkyu
  Wuesthoff & Wuesthoff
  Patentanwälte und Rechtsanwalt PartG mbB
  Schweigerstraße 2
  81541 München (DE)

(54) DEVICE AND METHOD FOR CONTROLLING DATABASE INFERENCE ATTACK

(57) The present disclosure relates to an apparatus and a method for controlling database (DB) inference attacks and, more specifically, to an apparatus and a method for controlling DB inference attacks, in which result data output from multiple database management systems (DBMSs) managing one or more DBs is received to detect inference attacks, which are difficult to detect using access control and query control methods, based on preestablished inference knowledge. The present disclosure provides an apparatus and a method for analyzing inference attacks based on multi-level risk, restricting one or more data attributes corresponding to inference attack elements associated with the inference attack, and providing the restricted result data to an inquirer, thereby preventing sensitive information from being inferred and leaked.

Fig. 3

## Description

Technical Field

The present disclosure relates to an apparatus and a method for controlling database (DB) inference attacks and, more specifically, to an apparatus and a method for controlling DB inference attacks, in which result data output from multiple database management systems (DBMSs) managing one or more DBs is received to detect inference attacks, which are difficult to detect using access control and query control methods, based on pre-established inference knowledge. The present disclosure provides an apparatus and a method for analyzing inference attacks based on multi-level risk, restricting one or more data attributes corresponding to inference attack elements associated with the inference attack, and providing the restricted result data to an inquirer, thereby preventing sensitive information from being inferred and leaked.

Background Art

In recent years, information and communication technology has been developing rapidly, and web-based services have been widely distributed and used. To provide all these services, each service provider needs to manage a large amount of customer information in databases (DBs), and distributes various knowledge-based content such as finance, shopping, education, and medical care based on the information in the databases.

As customer information is stored in the databases online, the number of hackers attempting to steal customer information stored in the databases has been increasing, and there have been frequent incidents of significant customer data breach from the databases of large-scale service providers.

In general, to prevent information stored in the database from being leaked, service providers apply access control technologies to their systems, which allow and block access to databases based on access control rules.

In addition, A query control method is also commonly used to protect information in databases. In other words, the query control method is a technique for protecting information in databases by setting and controlling query permissions based on various conditions, such as database users or groups, and prohibiting the execution of queries that are determined to be important in terms of security.

However, conventional access control and query control technologies have a fundamental limitation in that they cannot detect inference attacks. An inference attack refers to an attack to infer other information (hereinafter referred to as "sensitive information") that is sensitive to an individual or should be protected as private, by using publicly available or obtainable data.

In order to prevent such inference attacks, technologies such as preventing the disclosure of information that may potentially be used for inference attacks or encrypting information stored in databases are applied.

However, if all information that may be used for inference attacks is de-identified, or encrypted, there arises a problem in that such information becomes unavailable for legitimate use.

These types of technologies have a fundamental limitation in preventing inference attacks, and there is also a fundamental limitation in defending against inference attacks based on inferable knowledge. Here, "inferable knowledge" refers to data that is considered obtainable from other information source, social engineering, or other method.

In addition, there is a limitation in that it is not possible to perform multi-level risk analysis of inference attacks, to prevent information leakage caused by race condition inference attacks, and to prevent information leakage resulting from inference attacks across multiple databases.

Disclosure of the Invention

Technical Goals

Therefore, an object of the present disclosure is to provide an apparatus and a method for controlling database inference attacks by receiving result data output from a database management system (DBMS) managing one or more databases, detecting inference attacks undetectable by access control methods based on inference knowledge, analyzing inference attacks based on multi-level risk, restricting one or more data attributes corresponding to inference attack elements associated with the inference attack, and providing the restricted result data to the inquirer, thereby preventing sensitive information from being inferred.

Technical Solutions

To achieve the above object, an apparatus for controlling database inference attacks according to the present disclosure comprises: an input/output unit configured to receive queries from a plurality of inquirer terminal units and output the queries, receive result data in response to the received queries, and provide the result data to the corresponding inquirer terminal unit; one or more database management systems (DBMSs) configured to access at least one database (DB) including a plurality of data attributes, wherein at least one DB includes sensitive data attributes designated as sensitive information to be protected, the one or more DBMSs being configured to search the DBs in response to the queries input from the input/output unit, and generate and output the corresponding result data; and an inference control unit configured to establish inference knowledge including one or more inference logics, each of which comprises logical operations and inference attack elements corresponding to data attributes that can be used to infer sensitive information, detect inference attacks capable of inferring the sensitive information from result data received from the DBMS by referencing the inference logic, restrict at least one data attribute information corresponding to at least one inference attack element among the elements included in the result data in which an inference attack is detected, and transmit the restricted result data to the corresponding inquirer terminal unit via the input/output unit.

The inference control unit may comprise: an inference knowledge storage unit configured to store inference knowledge including one or more inference logics and inference attack elements corresponding to data attributes provided to an inquirer terminal unit; an inference setting unit configured to receive, from a security manager via a security administrator terminal, at least one data attribute that can be used to infer sensitive information configured in the DB, generate an inference logic including the at least one data attribute, store the inference logic as inference knowledge in the inference knowledge storage unit, set the data attributes included in the inference logic as inference attack elements, and output inference attack element information including the set inference attack elements; an inference attack element extraction unit configured to set the inference attack element information by receiving it from the inference setting unit, extract inference attack elements corresponding to the inference attack element information from result data received from the DBMSs, generate an inference attack transaction composed of the extracted inference attack elements, and output the generated inference attack transaction; an inference attack detection unit configured to receive the inference attack transaction, detect an inference attack by examining whether inference attack elements included in the inference attack transaction and inference attack elements stored in the inference knowledge storage unit and previously provided to the inquirer terminal unit satisfy any one of the inference logics stored in the inference knowledge storage unit, and, upon detection of the inference attack, output restriction request information for at least one of the inference attack elements included in the corresponding inference attack transaction; and an inference attack control unit configured to, when restriction request information is received from the inference attack detection unit, restrict at least one data attribute corresponding to at least one inference attack element included in the received restriction request information, among data attributes included in result data corresponding to an inference attack transaction in which the inference attack is detected, and provide the restricted result data to the corresponding inquirer terminal unit via the input/output unit.

The inference control unit may further comprise an inference attack serialization unit configured to serialize a plurality of inference attack transactions received from the inference attack element extraction unit and output the serialized inference attack transactions, and the inference attack detection unit is configured to detect an inference attack by the serialized inference attack transactions.

The inference setting unit may comprise: an inference logic generation unit configured to receive, from a security administrator via a security administrator terminal, at least one data attribute that can be used to infer the sensitive information configured in the DB, generate an inference logic including the received data attribute, and store the generated inference logic as inference knowledge in the inference knowledge storage unit; and an inference attack element generation unit configured to set the data attributes included in the inference logic as inference attack elements and output the set inference attack elements.

The inference logic generation unit may comprise: an inference attack logic generation unit configured to receive, from a security manager via a security administrator terminal, at least one data attribute that is directly associated with the sensitive information configured in the DB and can be used to infer the sensitive information, generate an inference attack logic including the at least one data attribute as one of the inference logics, and store the generated inference attack logic in the inference knowledge storage unit; and an inferable logic generation unit configured to receive at least one data attribute that can be used to increase the accuracy of inference attacks on the sensitive information, generate an inferable logic including the at least one data attribute, combine the inferable logic with the inference attack logic to generate an expanded inference attack logic, and store the expanded inference attack logic as inference knowledge in the inference knowledge storage unit.

The inference setting unit may further comprises a multi-level risk setting unit configured to, upon receiving a multi-level risk setting request from a security administrator via a security administrator terminal unit, generate inference attack subsets by selecting one or more inference attack elements without duplication within each subset, provide the generated inference attack subsets to the security administrator, receive a risk level for each inference attack subset from the security administrator, set a risk level for each inference attack subset, and store the set risk levels as inference knowledge in the inference knowledge storage unit.

The inference setting unit may further comprises a threshold setting unit configured to, upon receiving a threshold setting request from a security administrator terminal unit, receive an inference attack element threshold representing the number of inference attack elements to be restricted among the inference attack elements constituting the inference attack subset, and store the inference attack element threshold in the inference knowledge storage unit.

The threshold setting unit may be configured to, upon receiving the threshold setting request from a security administrator terminal unit, receive a risk level threshold representing a risk level at which the inference attack subset is to be restricted and set the received risk level threshold.

The threshold setting unit may be configured further to, upon receiving the threshold setting request, set an inferable logic threshold representing the number of inference attack elements to be restricted among the inference attack elements included in the inferable logic.

The inference attack detection unit may be configured to, when determining an inference attack element to be restricted, refer to the inference knowledge and determine at least one inference attack element to be restricted so that it is not provided to the inquirer terminal unit.

The inference attack control unit may be configured to restrict the data attribute information corresponding to at least one inference attack element to be restricted in the result data by performing masking or anonymization of the data attribute information, or by removing the data attribute information from the result data.

To achieve the above object, a method for controlling a database inference attack according to the present disclosure comprises: a DB search process in which one or more database management systems (DBMSs), each managing at least one database (DB) including a plurality of data attributes, wherein at least one DB includes sensitive data attributes designated as sensitive information to be protected, perform a search in response to a query input to the DB, and generate and output result data; and an inference control process in which an inference control unit establishes inference knowledge including one or more inference logics, each of which comprises logical operations and inference attack elements corresponding to data attributes that can be used to infer sensitive information, detects inference attacks capable of inferring the sensitive information from result data received from the DBMS by referencing the inference logic, restricts at least one data attribute information corresponding to at least one inference attack element among the elements included in the result data in which an inference attack is detected, and transmits the restricted result data to the corresponding inquirer terminal unit via an input/output unit.

The inference control process may comprise: an inference setting step in which the inference control unit, through an inference setting unit, receives, from a security administrator, at least one data attribute that can be used to infer sensitive information configured in the DB, generates an inference logic including the at least one data attribute, stores the inference logic as inference knowledge in an inference knowledge storage unit, sets the data attributes included in the inference logic as inference attack elements, and outputs inference attack element information including the set inference attack elements; an inference attack element extraction step in which the inference control unit sets the inference attack element information by receiving it from the inference setting unit, extracts inference attack elements corresponding to the inference attack element information from result data received from the DBMSs, generates an inference attack transaction composed of the extracted inference attack elements, and outputs the generated inference attack transaction; an inference attack detection step in which the inference control unit, through an inference attack detection unit, receives the inference attack transaction, detects an inference attack by examining whether inference attack elements included in the inference attack transaction and inference attack elements stored in the inference knowledge storage unit and previously provided to the inquirer terminal unit satisfy any one of inference attack logics, inferable logics, or inference attack subsets stored in the inference knowledge storage unit, and, upon detection of the inference attack, outputs restriction request information for at least one of the inference attack elements included in the corresponding inference attack transaction; and an inference attack control step in which, when the restriction request information is received from the inference attack detection unit, the inference control unit, through an inference attack control unit, restricts at least one data attribute corresponding to at least one inference attack element included in the received restriction request information, among data attributes included in result data corresponding to an inference attack transaction in which the inference attack is detected, and provides the restricted result data to the corresponding inquirer terminal unit via the input/output unit.

The inference control process may comprise an inference attack serialization step in which the inference control unit, through an inference attack serialization unit, serializes a plurality of inference attack transactions received from an inference attack element extraction unit and outputs the serialized inference attack transactions, and in the inference attack control step, when the restriction request information is received from the inference attack detection unit, the inference attack control unit restricts a data attribute corresponding to an inference attack element included in the received restriction request information, among the data attributes included in the result data corresponding to the inference attack transaction for which an inference attack is detected, and provides the restricted result data to the corresponding inquirer terminal unit via the input/output unit.

The inference setting step may comprise: an inference logic generation step in which the inference setting unit, through an inference logic generation unit, receives at least one data attribute that can be used to infer sensitive information configured in the DB from a security administrator, generates an inference logic including the at least one data attribute, and stores the generated inference logic as inference knowledge in the inference knowledge storage unit; and an inference attack element generation step in which the inference setting unit, through an inference attack element generation unit, sets the data attributes included in the inference logic as inference attack elements, and outputs the inference attack elements.

The inference logic generation step may comprise: an inference attack logic generation step in which the inference logic generation unit, through an inference attack logic generation unit, receives at least one data attribute that is directly associated with the sensitive information configured in the DB and can be used to infer the sensitive information from the security administrator, generates an inference attack logic including the at least one data attribute as one of the inference logics, and stores the generated inference attack logic in the inference knowledge storage unit; and an inferable logic generation step in which the inference logic generation unit, through an inferable logic generation unit, receives at least one data attribute that can be used to increase the accuracy of inference attacks on the sensitive information, generates an inferable logic including the at least one data attribute, combines the inferable logic with the inference attack logic to generate an expanded inference attack logic, and stores the expanded inference attack logic as the inference knowledge in the inference knowledge storage unit.

The inference setting step may further comprise a multi-level risk setting step in which, upon receiving a multi-level risk setting request from a security administrator via the security administrator terminal unit, the inference setting unit, through a multi-level risk setting unit, generates inference attack subsets by selecting one or more inference attack elements without duplication within each subset, provides the generated inference attack subsets to the security administrator, receives a risk level for each inference attack subset from the security administrator, sets the risk level for each inference attack subset, and stores the set risk levels as the inference knowledge in the inference knowledge storage unit.

The inference setting step may further comprise a threshold setting step in which, upon receiving a threshold setting request from the security administrator terminal unit, the inference setting unit, through a threshold setting unit, receives an inference attack element threshold representing the number of inference attack elements to be restricted among the inference attack elements constituting the inference attack subset, sets the received threshold, and stores the set threshold.

In the threshold setting step, upon receiving the threshold setting request from the security administrator terminal unit, the inference setting unit, through the threshold setting unit, further receives a risk level threshold representing a risk level at which the inference attack subset is to be restricted and sets the received risk level threshold.

In the threshold setting step, upon receiving the threshold setting request, the inference setting unit, through the threshold setting unit, further sets an inferable logic threshold representing the number of inference attack elements to be restricted among the inference attack elements included in the inferable logic.

In the inference attack detection step, when determining an inference attack element to be restricted, the inference attack control unit refers to the inference knowledge and determines at least one inference attack element such that it is not provided to the inquirer terminal unit.

In the inference attack control step, the inference attack control unit restricts the data attribute information corresponding to at least one inference attack element to be restricted in the result data by performing masking or anonymization of the data attribute information, or by removing the data attribute information from the result data.

Advantageous Effects

The present disclosure provides a method for fundamentally preventing information leakage caused by inference attacks by setting inference attack elements and inference logics capable of constructing inference attacks, detecting whether an inference attack occurs from result data obtained as a query result from a database (DB), and restricting data attributes corresponding to the inference attack elements included in the result data.

In addition, the present disclosure may prevent the inference of sensitive information by identifying attributes of inferable knowledge that are assumed to be obtainable through other information sources, social engineering, or other methods, setting them as inference attack elements, including them in the inference logic, and detecting result data that may be used to construct an inference attack.

Furthermore, the present disclosure may detect race condition inference attacks by serializing concurrent or parallel inference attacks and identifying inference attack elements in the serialized data, thereby blocking potential information leakage.

Moreover, the present disclosure can detect and defend against inference attacks on multiple database management systems (DBMSs) by analyzing result data output from multiple DBMSs.

Brief Description of the Drawings

FIG. 1 is a diagram illustrating a configuration of a database (DB) inference attack control apparatus according to the present disclosure.

FIG. 2 is a diagram illustrating a configuration of an inference control unit of a DB inference attack control apparatus according to the present disclosure.

FIG. 3 is a diagram illustrating a configuration of an inference setting unit of an inference control unit according to the present disclosure.

FIG. 4 is a diagram illustrating a DB configuration example according to an embodiment of the present disclosure.

FIG. 5 is a diagram illustrating a method of configuring an inference logic according to an embodiment of the present disclosure.

FIG. 6 is a diagram illustrating inference attack elements according to an embodiment of the present disclosure.

FIG. 7 is a diagram illustrating a multi-level risk table corresponding to each inference attack subset according to an embodiment of the present disclosure.

FIG. 8 is a diagram illustrating a method of configuring inference attack serialization based on concurrent processing of two results, according to an embodiment of the present disclosure.

FIG. 9 is a diagram illustrating a method of configuring inference attack serialization based on parallel processing of two results, according to an embodiment of the present disclosure.

FIG. 10 is a flowchart illustrating a method of controlling DB inference attacks according to the present disclosure.

Detailed Description

Referring to the accompanying drawings, the configuration and operation of a database (DB) inference attack control apparatus according to the present disclosure are described in detail, and a method of controlling DB inference attacks using the apparatus is also described.

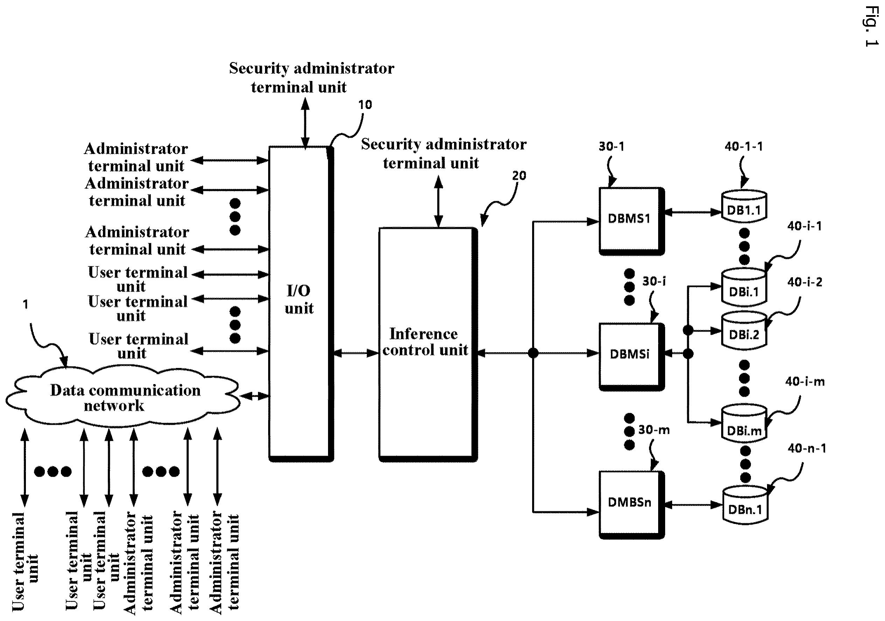

FIG. 1 is a diagram illustrating a configuration of a database (DB) inference attack control apparatus according to the present disclosure.

Referring to FIG. 1, the DB inference attack control apparatus of the present disclosure includes an input/output unit 10, an inference control unit 20, and at least one or more database management systems (DBMSs) 30.

The input/output unit 10 is connected either directly or via a data communication network 1 to inquirer terminal units of a plurality of inquirers.

Each inquirer terminal unit may transmit a query to the inference control unit 20 by accessing the input/output unit 10 through a web browser using Hypertext Transfer Protocol (HTTP) or Hypertext Transfer Protocol Secure (HTTPS), or by using various types of database client programs such as a DBMS client program or a self-developed client program.

The input/output unit 10 receives queries received from the inquirer terminal units and provides them to the inference control unit 20, and also receives the result data corresponding to the queries from the inference control unit 20 and provides the results to the corresponding inquirer terminal unit.

The inquirer may be either an administrator or any user. Accordingly, the inquirer terminal unit may be an administrator terminal unit or a user terminal unit.

The inquirer terminal unit may be a computer terminal such as a desktop computer, a personal computer, or a laptop, or a mobile terminal such as a smartphone or a smart pad.

The data communication network 1 may include an intranet, an extranet, and other types of data communication networks, and may also include wired and wireless internet networks, such as mobile communication networks including 3 generation (3G), 4G, 5G, a local area network (LAN), a wide area network (WAN), and a WiFi network.

The inquirer terminal unit, the input/output unit 10, the inference control unit 20, the DBMS 30, and the DB 40 may be directly connected via wired connections depending on the system configuration, or may be connected via wired or wireless communications over the data communication network 1.

The DBMS 30 includes at least one DB 40, searches the corresponding DB 40 in response to an input query, generates result data for the query, and transmits the result data to the inference control unit 20. The DBMS 30 may be configured to reside physically on the same server as the inference control unit 20, be located in the same physical space via the above-mentioned data communication network 1, be physically separated as in a data center or a cloud environment, or be configured as a combination thereof. Data stored in the DB 40 may be configured as a single table or as a plurality of tables, and the plurality of tables may be distributed across different DBs 40.

The result data $r_{(u,p,q)}$ is defined as shown in Mathematical Expression 1 below.

[Mathematical Expression 1]

$$r_{(u,p,q)} = \left\{ d_x \mid x = 1, \ldots, l \right\}$$

$$D_u = \left\{ r_{(u,p,q)} \mid p = 1, \ldots, n, \ \ q = 1, \ldots, m \right\}$$

$$Dset = \left\{ D_u \right\}$$

Here, $r_{(u,p,q)}$ denotes the q-th result data of $DBMS_p$ for a query issued by an inquirer u, and indicates that it comprises a set of data $d_x$. The $d_x$ is included in the q-th result data $r_{(u,p,q)}$ of $DBMS_p$ for the inquirer u and refers to data ordered by retrieval order, positional order, or temporal order. For example, if $y < z$ then data $d_y$ precedes data $d_z$ in terms of retrieval order, positional order, or temporal order. $D_u$ denotes a result dataset for the inquirer u, comprising a set of $r_{(u,p,q)}$. Dset denotes a result dataset for all inquirers, comprising a set of $D_u$.

The inference control unit 20 provides the input query to the corresponding DBMS 30 and receives result data $r_{(u,p,q)}$ from each of the DBMSs 30 in response to the corresponding query.

The inference control unit 20 extracts inference attack elements, which are data attributes included in the result data, and determines whether the extracted inference attack elements construct a preset inference attack logic. If it is determined that the extracted elements construct the inference attack logic, the inference control unit 20 restricts data attribute information corresponding to the inference attack elements in the result data so that the preset sensitive information cannot be inferred, and then provides the restricted result data to the corresponding inquirer terminal unit through the input/output unit 10. The restriction may include masking or anonymizing the data attribute information corresponding to the inference attack elements so that it cannot be identified, or removing the corresponding data attribute information from the result data.

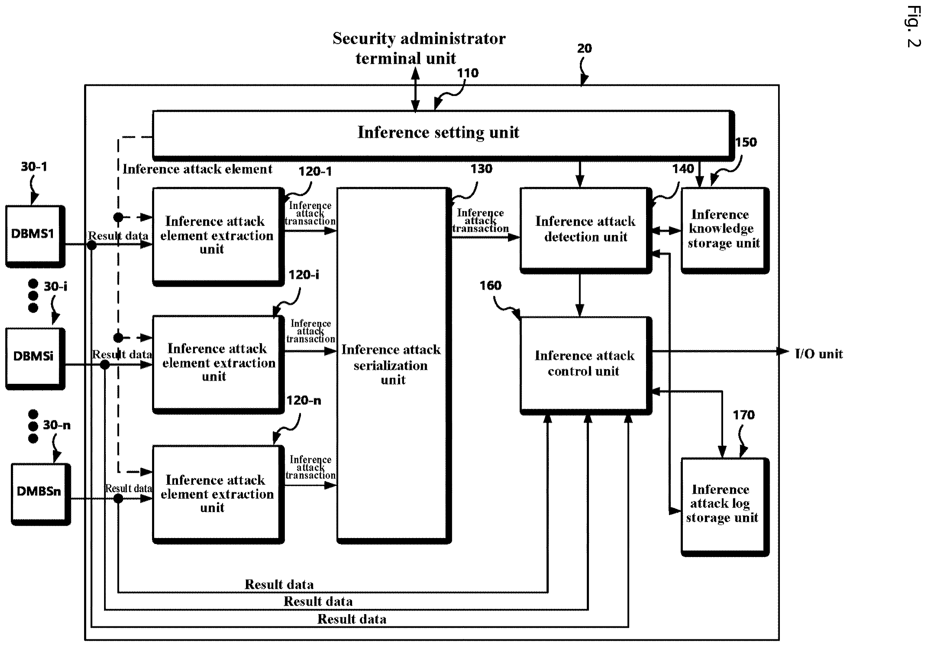

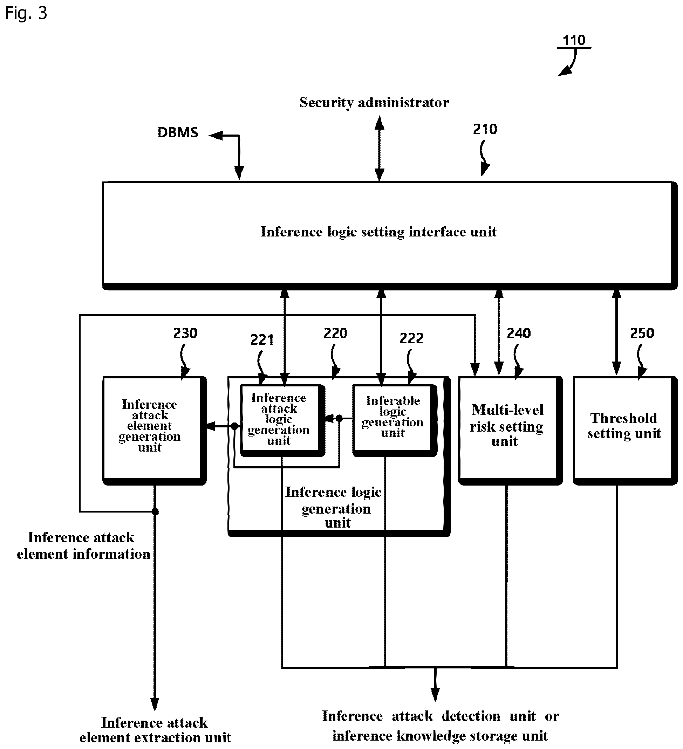

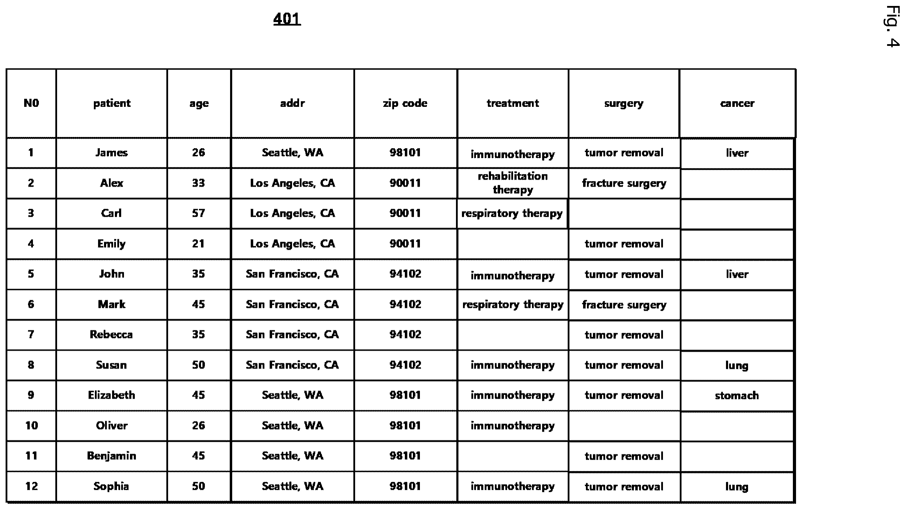

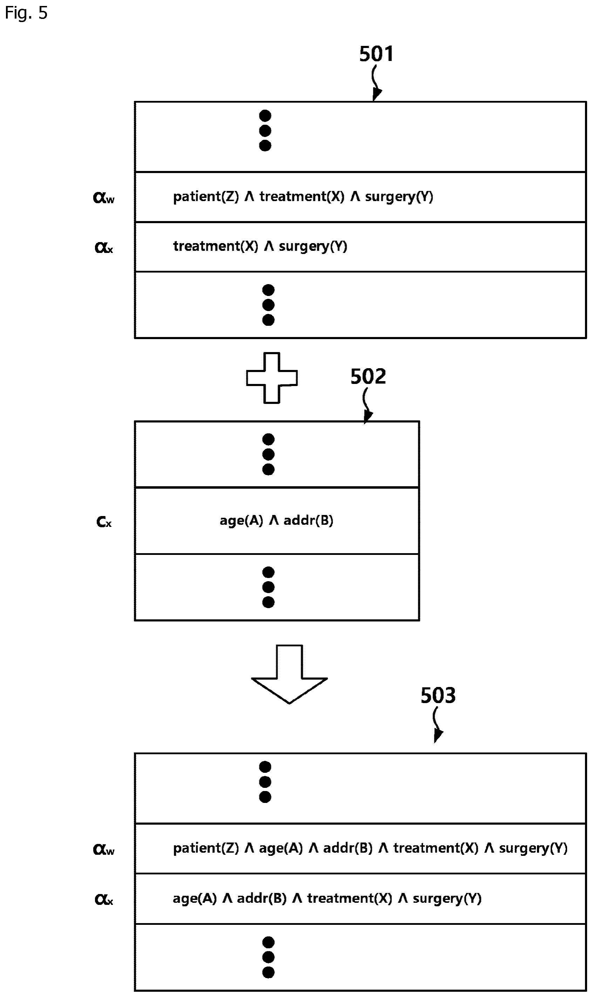

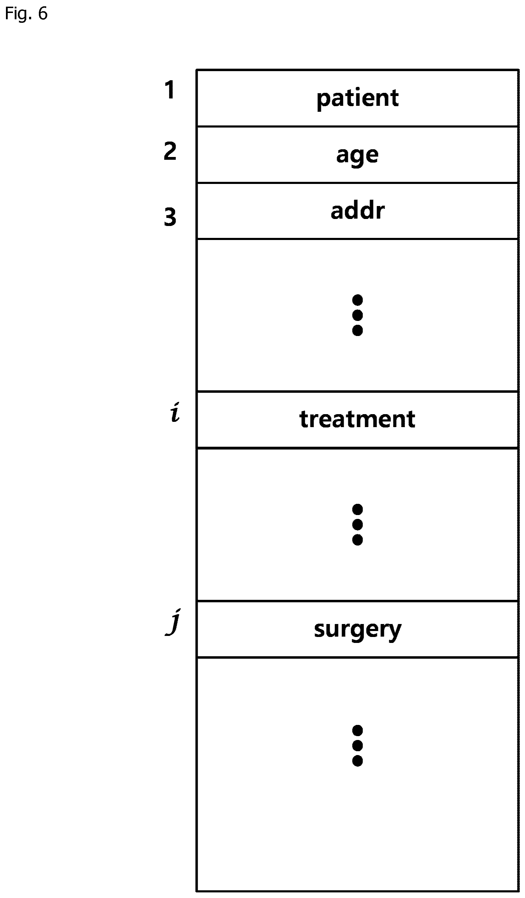

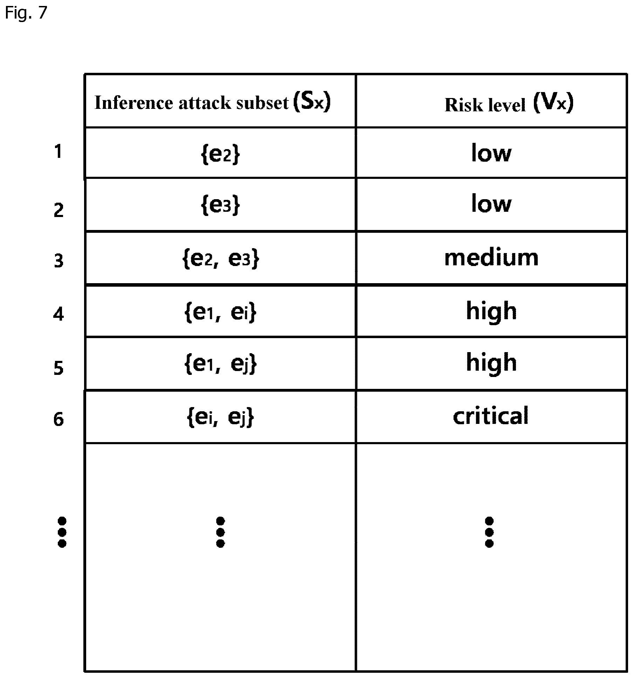

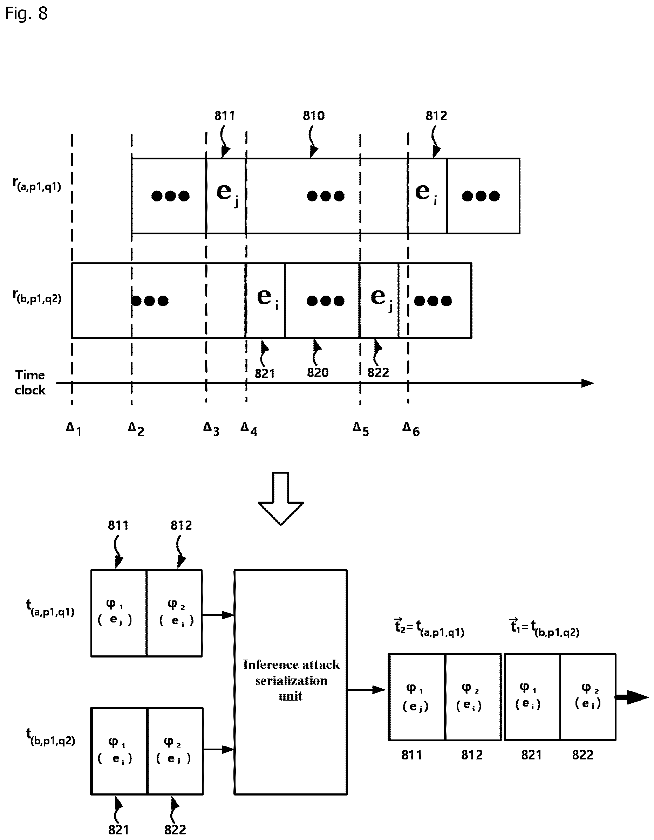

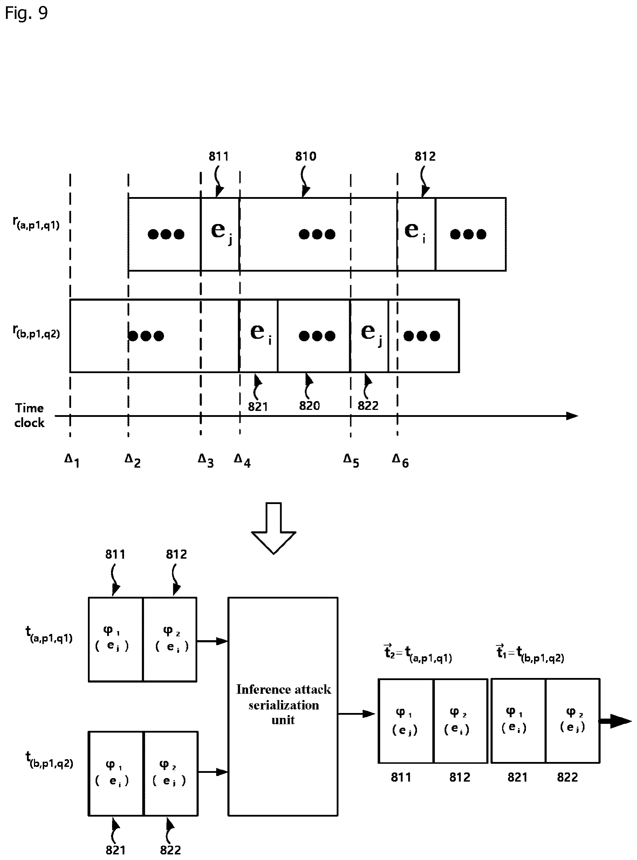

FIG. 2 is a diagram illustrating a configuration of an inference control unit of a DB inference attack control apparatus according to the present disclosure. FIG. 3 is a diagram illustrating a configuration of an inference setting unit of an inference control unit according to the present disclosure. FIG. 4 is a diagram illustrating a DB configuration example according to an embodiment of the present disclosure. FIG. 5 is a diagram illustrating a method of configuring an inference logic according to an embodiment of the present disclosure. FIG. 6 is a diagram illustrating inference attack elements according to an embodiment of the present disclosure. FIG. 7 is a diagram illustrating a multi-level risk table corresponding to each inference attack subset according to an embodiment of the present disclosure. FIG. 8 is a diagram illustrating a method of configuring inference attack serialization based on concurrent processing of two results, according to an embodiment of the present disclosure. FIG. 9 is a diagram illustrating a method of configuring inference attack serialization based on parallel processing of two results, according to an embodiment of the present disclosure. Hereinafter, description will be made with reference to FIGS. 2 through 9, and an example in which the DB 40 is configured as illustrated in FIG. 4 will be described.

First, a configuration of a table included in the DB 40 will be described with reference to an embodiment of the present disclosure.

The data in the DB 40 may be configured as a single table 401 including a plurality of records, each having a set of data attributes. FIG. 4 illustrates a table including twelve (12) records with seven (7) data attributes. In addition, although the data in the DB 40 may have seven data attributes, it may also be divided and configured into a plurality of tables.

In FIG. 4, the table 401 includes twelve (12) records, each having seven (7) data attributes: 'patient (patient name)', 'age', 'addr (address)', 'zip code', 'treatment', 'surgery' and 'cancer'.

In the example of FIG. 4, the data attribute 'cancer' is designated as sensitive information to be protected. It is assumed that queries directly accessing the data attribute 'cancer' or query results including its content are blocked by conventional protection methods such as query restriction and access control, and therefore the data attribute 'cancer' cannot be obtained. Accordingly, the inquirer may not directly obtain information on the data attribute 'cancer' from the DB 40.

The inference control unit 20 includes an inference setting unit 110, a plurality of inference attack element extraction units 120 configured to receive result data from each of the multiple DBMSs 30, an inference attack serialization unit 130, an inference attack detection unit 140, an inference knowledge storage unit 150, an inference attack control unit 160, and an inference attack log storage unit 170.

The inference setting unit 110 includes an inference logic setting interface unit 210, an inference logic generation unit 220, an inference attack element generation unit 230, a multi-level risk setting unit 240, and a threshold setting unit 250.

The inference logic setting interface unit 210 is configured to connect to a security administrator terminal unit either directly or via the input/output unit 10.

The inference logic setting interface unit 210 provides an inference logic setting means to the connected security administrator terminal unit, enables identification of the data attributes of tables configured in the DBs 40 through the DBMSs 30 and of the data attribute corresponding to the sensitive information using the inference logic setting means, and provides a setting means for each inference logic setting element so that individual settings for the corresponding inference logic setting elements can be performed.

The inference logic setting elements may include inference attack logics, inferable logics, multi-level risk levels, thresholds, and the like.

The inference logic generation unit 220, which includes an inference attack logic generation unit 221 and an inferable logic generation unit 222, generates one or more inference logics, and stores them either through the inference attack detection unit 140 or directly in the inference knowledge storage unit 150.

The inference attack logic generation unit 221 generates one or more inference attack logics by receiving, via the setting means for the inference attack logic setting element provided to the security administrator terminal unit through the inference logic setting interface unit 210, logical operations and data attributes other than those corresponding to the sensitive information configured in the DB 40, which can be used to directly infer the sensitive information. The logical operations may be input by the security administrator or predefined in advance. The logical operations may include "and", "or", "not", ">", "=", "<", etc., and may be configured as a single logical expression (e.g., A and B) or a composite expression (e.g., not(A and B)).

The inference attack logic may be defined as shown in Mathematical Expression 2 below, and an example of its configuration is described with reference to 501 of FIG. 5.

[Mathematical Expression 2]

$$A = \{\alpha_x \mid x = 1, .. n\}$$

Here, $\alpha_x$ refers to an inference attack logic, and A denotes a set of the inference attack logic $\alpha_x$.

The inference attack logic $\alpha_x$ comprises one or more data attributes.

501 of FIG. 5 represents the inference attack logic $\alpha_x$ in the DB configuration example shown in FIG. 4, and specifically illustrates an inference attack logic composed of the data attributes 'patient', 'treatment' and 'surgery', which can be used to directly infer the identity of a cancer patient, assuming that the name of a cancer patient is designated as sensitive information. In other words, in the case of 501 of FIG. 5, the inference attack logics $\alpha_w$, $\alpha_x$ may be expressed as shown in the following Mathematical Expression 3.

[Mathematical Expression 3]

$$\alpha_w = patient(Z) \wedge treatment(X) \wedge surgery(Y)$$

$$\alpha_x = treatment(X) \wedge surgery(Y)$$

Here, $\alpha_w$ denotes a previous inference attack, $\alpha_x$ denotes a next inference attack logic of $\alpha_w$, and $\wedge$ denotes the logical operator and.

In other words, the inference attack logic $\alpha_w$ of Mathematical Expression 3 denotes to an inference attack in which patient Z can be inferred to be a cancer patient, on the basis that patient Z has received immunotherapy (X=immunotherapy) and tumor removal surgery (Y=tumor removal).

The inference attack logic generation unit 221 generates the inference attack logic $\alpha_w$ and stores it as one of inference knowledge in the inference knowledge storage unit 150.

Here, it is assumed that access control is applied to prevent the acquisition of information related to the data attribute 'patient', which is identification information. Accordingly, the inference attack logic $\alpha_x$ of Mathematical Expression

3, excluding the controlled data attribute 'patient', may be generated and stored as part of the inference knowledge in the inference knowledge storage unit 150. As such, since the data attribute 'patient' is controlled, the valid inference attack elements included in both inference attack logics $\alpha_w$ and $\alpha_x$ identically include two data attributes, treatment and surgery. Therefore, the following description will be provided based on the inference attack logic $\alpha_x$.

Since the inquirer cannot directly obtain information regarding the data attributes 'patient' and 'cancer' in FIG. 4, it is not possible to accurately infer whether a specific patient is a cancer patient based on the inference attack logic $\alpha_x$. In other words, it is insufficient to identify whether a specific person is a cancer patient based only on the information including 'immunotherapy (X=immunotherapy)' and 'tumor removal (Y=tumor removal)'.

In FIG. 4, for example, records 1, 5, 8, 9, and 12 in table 401 correspond to patients who received immunotherapy and tumor removal surgery. However, since the information related to the data attributes 'patient' and 'cancer' is inaccessible, it may be inferred that the individuals have cancer, but the identity of the specific cancer patient remains unknown.

Thus, in order to specifically identify and accurately infer a cancer patient, an additional inference attack element, which is not included in the inference attack logic $\alpha_x$, is required. Accordingly, the inferable logic generation unit 222 generates an inferable logic $c_x$ by receiving, from the security administrator terminal unit via the inference logic setting interface unit 210, one or more data attributes that can be used for improving the accuracy of the inference attack on the sensitive information in the DB 40. The inferable logic may be defined as shown in the following Mathematical Expression 4, and a configuration example is described with reference to 502 of FIG. 5.

[Mathematical Expression 4]

$$C = \{c_x \mid x = 1, ..n\}$$

Here, $c_x$ refers to an inferable logic determined to be usable for improving the accuracy of an inference attack on the sensitive information, and C denotes a set of inferable logics.

502 of FIG. 5 illustrates the inferable logic $c_x$ based on the DB configuration example of FIG. 4, and represents the inferable logic consisting of 'age' and 'addr (address)', which are data attributes that can be used to infer the cancer patient when the name of a cancer patient is designated as the sensitive information. In other words, in the case of 502 of FIG. 5, the inferable logic $c_x$ may be expressed as shown in the following Mathematical Expression 5.

[Mathematical Expression 5]

$$c_x = age(A) \wedge addr(B)$$

Here, A denotes the information of 'age', and B denotes the information of 'addr (address)'.

More specifically, as mentioned above, it is not possible to identify a cancer patient based solely on the information regarding immunotherapy and tumor removal.

Likewise, it is insufficient to identify whether a given patient is a cancer patient based solely on the information regarding age and address.

Even it is not possible to determine whether a given patient is a cancer patient based solely on the information regarding age, address, and immunotherapy. For example, James (no. 1) and Oliver (no. 10), who are both 26 years old and residing in Seattle, have received immunotherapy. However, Oliver is not a cancer patient.

Also, it may still be insufficient to determine whether a given patient is a cancer patient based solely on the information regarding age, address, and tumor removal. For example, John (no. 5) and Rebecca (no. 7), who are both 35 years old and residing in San Francisco, have received the tumor removal surgery, but Rebecca is not a cancer patient.

However, if all the information regarding age, address, immunotherapy, and tumor removal is obtained, it becomes possible to determine whether a specific individual is a cancer patient. In other words, the patient's name can be identified by linking the age and address information. (For example, a person residing in the same area as the patient may already know the name and age of the patient. Alternatively, the name and age of the patient may be indirectly obtained through someone living in that area or may be inferred by combining information acquired from other sources.) Furthermore, by associating the obtained age and address information with immunotherapy and tumor removal information, it becomes possible to infer that the identified patient is a cancer patient.

Hence, when the inferable logic is generated, the inferable logic generation unit 222 generates the expanded inference logics $\alpha_w$ and $\alpha_x$ by applying the inferable logic $c_x$ to the inference logics $\alpha_w$ and $\alpha_x$, as shown in 503 of FIG. 5 and defined in the following Mathematical Expression 6, and stores them in the inference knowledge storage unit 150.

[Mathematical Expression 6]

$$\alpha_w = patient(Z) \wedge \underline{age(A)} \wedge \underline{addr(B)} \wedge treatment(X) \wedge surgery(Y)$$

$$\alpha_s = \underline{age(A)} \wedge \underline{addr(B)} \wedge treatment(X) \wedge surgery(Y)$$

The inference attack element generation unit 230 receives one or more of the inference attack logics, the inferable logics and the expanded inference attack logics, all of which are generated by the inference logic generation unit 220, and sets the data attributes included in any of the received logics as inference attack elements, as shown in FIG. 6.

The inference attack element generation unit 230 provides the inference attack element extraction unit 120 with inference attack element information (also referred to as an " inference attack element set", E), which represents information on the configured inference attack elements. According to an embodiment, the inference attack element information E may be provided to the security administrator terminal unit via the inference logic setting interface unit 210 or to the multi-level risk setting unit 240. The inference attack element information E may be expressed as shown in the following Mathematical Expression 7.

[Mathematical Expression 7]

$$E=\{e_i \mid i=1,..n\}$$

Here, $e_i$ denotes an inference attack element, and E denotes an inference attack element set.

For example, as shown in FIG. 6, $e_1$=patient, $e_2$=age, $e_3$=addr, $e_i$=treatment, and $e_j$=surgery.

If a security administrator requests a multi-level risk setting via the security administrator terminal unit, the multi-level risk setting unit 240 receives the inference attack elements from the inference attack element generation unit 230 and generates an inference attack element subset $s_x$. The inference attack subset $s_x$ includes one or more inference attack elements $e_i$ from the inference attack element information, as shown in FIG. 7. No order is assigned among the inference attack elements within the inference attack subset.

The multi-level risk setting unit 240 provides the security administrator terminal unit with a multi-level risk table including inference attack subsets through the inference logic setting interface unit 210, as shown in FIG. 7. At this time, the risk level field may have a null value.

The multi-level risk setting unit 240 receives a risk level for each inference attack subset in the multi-level risk table from the security administrator via the security administrator terminal unit, sets the risk level values for the respective subsets, and stores the multi-level risk table, updated with the set risk levels, in the inference knowledge storage unit 150. The risk levels may be categorized as low < medium < high < critical, as shown in FIG. 7. The multi-level risk table of FIG. 7 may be expressed in the following Mathematical Expression 8.

[Mathematical Expression 8]

$$V=\{(s_x,v_x) \mid x=1,..n\}$$

Here, $s_x$ denotes an inference attack subset, and $v_x$ denotes a corresponding risk level. V represents the multi-level risk table.

In FIG. 6 and FIG. 7, for example, if the multi-level risk level is set to $(s_3, v_3) = (\{e_2, e_3\}$, medium), that is, $(s_3, v_3) = (\{age(A), addr(B)\}$, medium), it means that the risk level is "medium" if an inference attack subset including inference attack elements capable of obtaining the patient's age information (A) and address information (B) is detected.

As another example, if the multi-level risk level is set to $(s_5, v_5)=(\{e_1, e_j\}$, high), that is, $(s_5, v_5)=(\{patient(Z),$ surgery(Y)\}, high), it means that the risk level is "high" if an inference attack subset including inference attack elements capable of obtaining the patient's name (Z) and tumor removal information (Y = tumor removal)is detected.

Similarly, if the multi-level risk level is set to $(s_6, v_6)=(\{e_i, e_j\}$, critical), that is, $(s_6, v_6)=(\{treatment(X), surgery(Y)\},$

critical), it means that the risk level is "critical" if an inference attack subset including inference attack elements capable of obtaining the patient's immunotherapy information and tumor removal information (i.e., X=immunotherapy, Y=tumor removal) is detected.

The threshold setting unit 250 receives, from the security administrator, a threshold for the inference attack elements to be restricted among the inference attack elements extracted from the result data received from the DBMS 30, and stores the threshold in the inference knowledge storage unit 150. The thresholds are classified into three types: an inference attack element threshold ($\rho$), a risk level threshold ($\sigma$), and an inferable logic threshold ($\tau$). One or more of these thresholds may be applied.

The inference attack element threshold $\rho$ is defined as the number of inference attack elements to be restricted among the extracted inference attack elements, that is, within the inference attack subset $s_x$. This threshold is expressed as shown in the following Mathematical Expression 9.

[Mathematical Expression 9]

$$\rho = \left\{ k \mid 1 \leq k(\text{Integer}) \leq len(s_x) \right\}$$

len() denotes a function that returns the number of items of the inference attack subset $s_x$. Accordingly, the inference attack element threshold $\rho$ is set to a positive integer value that is equal to or less than the number of items in the inference attack subset $s_x$.

In other words, when it is determined that an inference attack corresponding to the inference attack subset $s_x$ has occurred, the inference attack element threshold $\rho$ is applied to determine, among the inference attack elements forming the inference attack subset $s_x$, a number of inference attack elements corresponding to the threshold to be restricted, and to restrict disclosure of information of the determined inference attack elements, thereby preventing success of the inference attack.

For example, assuming that the inference attack element threshold $\rho$ is set to 1, and that the inference attack subset is $s_x = \{e_i, e_j\} = \{treatment(X), surgery(Y)\}$, then since $len(s_x)=2$, the information corresponding to one of the two inference attack elements, $e_i$ and $e_j$, included in the inference attack subset is restricted from disclosure, thereby preventing success of the inference attack.

The inference attack element corresponding to the inference attack element threshold $\rho$ is selected for restriction based on the earliest input time, the latest input time, or randomly.

The risk level threshold $\sigma$ is defined as shown in the following Mathematical Expression 10.

[Mathematical Expression 10]

$$\sigma \in \{v_x\}$$

Here, $v_x$ denotes a risk level.

Thus, the risk level threshold $\sigma$ may be set to any one of the risk levels such as low, medium, high, or critical. The level may be indicated using numbers, letters, or symbols that represent the relative severity or magnitude of each level.

For example, if the risk level threshold is set to $\sigma$=high, and any one of inference attack subsets, e.g., $\{e_1, e_i\}$, $\{e_1, e_j\}$, and $\{e_i, e_j\}$, having a risk level equal to or higher than the risk level threshold (i.e., high or critical), is detected, then all inference attack elements of the detected inference attack subset are restricted from disclosure. Accordingly, if all the inference attack elements included in the inference attack subset are restricted from disclosure, the usability of the data will be reduced.

In addition, according to another embodiment, if the risk level threshold and the inference attack element threshold are applied in combination, when an inference attack subset having a risk level equal to or higher than the set risk level threshold is detected, only a number of inference attack elements corresponding to the inference attack element threshold $\rho$ among the inference attack elements included in the subset are restricted from disclosure. Thus, by applying restriction only to a number of inference attack elements corresponding to the inference attack element threshold $\rho$, rather than to all inference attack elements in the subset, it is possible to achieve the purpose of inference control and also improve data usability.

The inferable logic threshold $\tau$ is defined as shown in the following Mathematical Expression 11.

[Mathematical Expression 11]

$$\tau = \{ k \mid 0 \leq k \leq len(c_x) \}$$

Here, $c_x$ denotes the inferable logic and len() denotes a function that returns the number of items in the inferable logic.

As shown in Mathematical Expression 11, the inferable logic threshold $\tau$ is set to an integer value greater than 0 and less than the number of items in the inferable logic subset ($c_x$).

If it is determined that an inference attack corresponding to the inferable logic has occurred, the inferable logic threshold $\tau$ is applied to determine, among the inference attack elements forming the inferable logic, a number of inference attack elements corresponding to the threshold to be restricted, and to restrict disclosure of information of the determined inference attack elements. The inference attack element corresponding to the inferable logic threshold $\tau$ is selected for restriction based on the earliest input time, the latest input time, or randomly.

As described above, any one of the inference attack element threshold $\rho$, the risk level threshold $\sigma$, and the inferable logic threshold $\tau$ may be set, or two or more of them may be set in combination. Accordingly, by appropriately setting and applying restrictions based on a combination of these three thresholds, it is possible to prevent sensitive information from being leaked by the inference attack while increasing data usability.

The security administrator may access the inference logic setting interface unit 210, via the security administrator terminal unit, to add, delete, and modify the above-described inference attack logics and inferable logics, to add, delete, and modify the risk levels in the multi-level risk table, and to add, delete, and modify the thresholds. In addition, the security administrator may change the value of each threshold.

The inference attack element extraction unit 120 sets the inference attack element information by receiving it from the inference setting unit 110. The inference attack element extraction unit 120 then receives result data $r_{(u,p,q)}$, which is search result data for a query issued by an arbitrary inquirer, from the DBMS 30. From the result data, the inference attack element extraction unit 120 extracts the data attributes corresponding to the inference attack elements in the inference attack element information, then generates an inference attack transaction $t_{(u,p,q)}$ including the corresponding inference attack elements, and outputs the transaction to the inference attack serialization unit 130. The inference attack transaction is defined as shown in the following Mathematical Expression 12.

[Mathematical Expression 12]

$$t_{(u,p,q)} = [\phi_1, \phi_2, ..., \phi_l]$$

$$T_u = \{ t_{(u,p,q)} \mid p=1,...,n, \ q=1,...,m \}$$

$$Tset = \{ T_u \}$$

Here, $t_{(u,p,q)}$ denotes the q-th inference attack transaction of $DBMS_p$ initiated by an arbitrary inquirer u, and it consists of a set of inference attack elements $\varphi_x$. Each $\varphi_x$ is an inference attack element included in the q-th inference attack transaction $t_{(u,p,q)}$ of DBMSp initiated by an arbitrary inquirer u, and is included in the inference attack element information E. The inference attack elements $\varphi_x$ are ordered based on retrieval order, positional order, or temporal order. In other words, for two time points y and z, if y < z, then the inference attack element $\varphi_y$ precedes the inference attack element $\varphi_z$. Tset denotes a set of all inference attack transactions attempted by all inquirers and consists of all $T_u$. Each $T_u$ represents a set of inference attack transactions by inquirer u and consists of a set of $t_{(u,p,q)}$.

An inference attack transaction, in which the extracted inference attack elements are serialized, may be defined as shown in Mathematical Expression 13 below.

[Mathematical Expression 13]

$$\vec{t_x} \in \{t_{(u,p,q)}\} \subseteq \{T_u\} \ (\text{Here,} \ Tset = \{T_u\})$$

$$\vec{T} = \{\vec{t_x} \mid x = 1, \ldots, n\}$$

Here, $\vec{t_x}$ denotes a serialized inference attack transaction and is included in the q-th inference attack transaction set $T_u = \{t_{(u,p,q)}\}$ of $DBMS_p$ initiated by inquirer u. $\vec{T}$ denotes a set of $\vec{t_x}$, that is, a serialized inference attack transaction set. Accordingly, for two time points y and z, if y < z, then the inference attack transaction $\vec{t_y}$ precedes the inference attack transaction $\vec{t_z}$.

FIG. 8 illustrates a case in which inference attack elements of first result data $r_{(a,p1,q1)}$ and second result data $r_{(b,p1,q2)}$, for inquirers a and b, respectively, are input concurrently into the inference attack element extraction unit 120 from the same $DBMS_{p1}$, whereas FIG. 9 illustrates a case in which they are input in parallel.

More specifically, referring to FIG. 8 and FIG. 9, inference attack elements $e_j$ and $e_i$ of inquirer a, and inference attack elements $e_i$ and $e_j$ in the result data of inquirer b, are generated concurrently or in parallel in time, and are input into the inference attack element extraction unit 120.

At this time, for the result data of inquirer a, the inference attack element extraction unit 120 outputs the inference attack transaction $t_{(a,p1,q1)} = \{\varphi_1 = e_j, \varphi_2 = e_i\} = \{\varphi_1 = surgery(Y), \varphi_2 = treatment(X)\}$ to the inference attack serialization unit 130, in temporal order, $e_j$ followed by $e_i$.

In addition, the inference attack element extraction unit 120 outputs an inference attack transaction $t_{(b,p1,q2)} = \{\varphi_1 = e_i, \varphi_2 = e_j\} = \{\varphi_1 = treatment(X), \varphi_2 = surgery(Y)\}$ to the inference attack serialization unit 130, in temporal order, $e_i$ followed by $e_j$, for the result data of inquirer b.

Upon receiving the inference attack transactions $t_{(a,p1,q1)}$ and $t_{(b,p1,q2)}$ as well as the input time information of the result data $r_{(a,p1,q1)}$ and $r_{(b,p1,q2)}$, the inference attack serialization unit 130 serializes them according to the input time of the result data, rather than the input time of the inference attack elements, and outputs them to the inference attack detection unit 140 in the order of $\vec{t_1} = t_{(b,p1,q2)}$ followed by $\vec{t_2} = t_{(a,p1,q1)}$, as illustrated in in FIGS. 8 and 9. In other words, the inference attack transaction $\vec{t_1} = t_{(b,p1,q2)}$ temporally precedes the inference attack transaction $\vec{t_2} = t_{(a,p1,q1)}$.

This method serializes the inference attack transactions output from all inference attack element extraction units 120 and provides the serialized inference attack transactions to the inference attack detection unit 140.

Upon receiving the serialized inference attack transactions from the inference attack serialization unit 130, the inference attack detection unit 140 detects an inference attack transaction including an inferable logic $c_x$ among the input inference attack transactions, and determines the inference attack element to be restricted based on the predefined inferable logic threshold $\tau$, according to an embodiment. In addition, the inference attack detection unit 140 detects an inference attack transaction including an inference attack subset $s_x$ among the input inference attack transactions, analyzes the risk level by referring to the multi-level risk table stored in the inference knowledge storage unit 150, determines whether the risk level of the inference attack subset is equal to or greater than the predefined risk level threshold, and accordingly determines the inference attack element to be restricted.

When the inference attack element to be restricted is determined, the inference attack detection unit 140 generates restriction request information including the inference attack element to be restricted and outputs it to the inference attack control unit 160.

A case is described in which the inference attack element threshold $\rho$ is set to 1, the risk level threshold $\sigma$ is set to critical, and the inferable logic threshold $\tau$ is set to 1. In this case, an inference attack logic, age(A) $\wedge$ addr(B) $\wedge$ treatment(X) $\wedge$ surgery(Y), is applied. In addition, the serialized inference attack transaction $\vec{t_0} = [age(A), addr(B)]$ is input first, followed by the serialized inference attack transactions $\vec{t_1}$ and $\vec{t_2}$.

Since the inferable logic $c_x = age(A) \wedge addr(B)$ is detected in the serialized inference attack transaction $\vec{t_0}$ that was input first, the inference attack detection unit 140 selects one of age(A) and addr(B) in accordance with the predefined inferable logic threshold $\tau = 1$ and restricts the selected element. According to an embodiment, the inference attack detection unit 140 determines to restrict the last element, addr(B), in the inference attack transaction $\vec{t_0} = [age(A), addr(B)]$ and to provide the remaining element, age(A), to the inquirer. This determination is stored as inference knowledge in the inference knowledge storage unit 150.

The inference attack detection unit 140 determines whether the first input transaction $\vec{t_1} = t_{(b,p1,q2)} = [\varphi_1 = e_i, \varphi_2 = e_j] = [\varphi_1 = treatment(X), \varphi_2 = surgery(Y)]$, among the serialized inference attack transactions $\vec{t_1}$ and $\vec{t_2}$, matches an inference attack subset for which the risk level threshold $\sigma$ is set to critical. As a result of the determination, since the inference attack transaction $\vec{t_1}$ matches the inference attack subset $s_6 = \{e_i, e_j\}$, the inference attack detection unit 140 selects one of treatment(X) and surgery(Y) according to the predefined inference attack element threshold $\rho=1$ and restricts the selected element. According to an embodiment, the inference attack detection unit 140 determines to restrict the last element, surgery(Y), in the inference attack transaction $\vec{t}_1$ = [treatment(X), surgery(Y)], and to provide the remaining element, treatment(X), to the inquirer. This determination is stored as inference knowledge in the inference knowledge storage unit 150.

Since the previously occurred inference attack elements age(A) and addr(B), together with the inference attack elements $\varphi_1$ = treatment(X), $\varphi_2$ = surgery(Y) of $\vec{t}_1$, constitute the inference attack logic $(\alpha_x)$, the inference attack detection unit 140 notifies the security administrator terminal unit that an inference attack has occurred and provides reporting information regarding the corresponding event.

As such, when it is detected that the inference attack logic $c_x$ and the inference attack subset $s_x$ are formed, the inference attack detection unit 140 determines the inference attack element to be restricted based on the threshold, generates restriction request information including the determined inference attack element, and provides the information to the inference attack control unit 160.

Accordingly, since the inference attack transaction $\vec{t}_2$, which is input after $\vec{t}_1$ also matches the inference attack subset $s_6 = \{e_i, e_j\}$, for which the risk level threshold $\sigma$ is set to critical, the inference attack detection unit 140 is required to restrict one of the two inference attack elements in the inference attack transaction $\vec{t}_2$. The inference attack detection unit 140 refers to the inference knowledge stored in the inference knowledge storage unit 150, generates restriction request information requesting restriction of the same inference attack element as was restricted in $\vec{t}_1$, and provides it to the inference attack control unit 160.

Here, it is apparent that the inference control is performed on the inference attack transactions $t_{(a,p1,q1)}$ and $t_{(b,p2,q2)}$ generated from different $DBMS_{p1}$ and $DBMS_{p2}$, and on the result data $r_{(a,p1,q1)}$ and $r_{(b,p2,q2)}$, as described above. In addition, it is also apparent that the inference control is performed on the inference attack transactions $t_{(a,p1,q1)}$ and $t_{(a,p2,q2)}$ generated by the same user a from the different $DBMS_{p1}$ and $DBMS_{p2}$, and on the result data $r_{(a,p1,q1)}$ and $r_{(a,p2,q2)}$, in the same manner.

The foregoing description has explained a case in which multiple thresholds are applied in combination. However, if only the risk level threshold (set to critical) is applied, the inference attack detection unit 140 may generate restriction request information requesting restriction of all the elements in the inference attack subset $s_x$, and provide the generated restriction request information to the inference attack control unit 160.

In addition, as another example, it is assumed that the inference attack element threshold is set to 1, the inferable logic threshold is set to 0, and the risk level threshold $\sigma$ is set to critical.

In this case, for the serialized inference attack transaction $\vec{t}_0$, which is input first, the inference attack detection unit 140 determines, based on the inferable logic threshold $\tau = 0$, that both age(A) and addr(B) may be provided to the inquirer, and stores this determination as inference knowledge in the inference knowledge storage unit 150. The inference attack detection unit 140 determines that the inference attack transaction $\vec{t}_1$ matches the inference attack subset $s_6 = \{e_i, e_j\}$, for which the risk level threshold $\sigma$ is set to critical.

Thus, the inference attack detection unit 140 selects one of the inference attack elements, treatment(X) and surgery(Y) in $\vec{t}_1$, according to the predefined inference attack element threshold $\rho = 1$, and restricts the selected element. According to this embodiment, the last element, surgery(Y), is determined as the inference attack element to be restricted. The inference attack element to be restricted and the inference attack element to be provided are stored as inference knowledge in the inference knowledge storage unit 150. The inference attack detection unit 140 then generates restriction request information for the inference attack transaction $\vec{t}_1$ and provides it to the inference attack control unit 160. Furthermore, upon determining that the previously occurred inference attack elements {age(X), addr(Y)}, together with the inference attack elements treatment(X) and surgery(Y) in the inference attack transaction $\vec{t}_1$ constitute the inference attack logic $\alpha_x$, the inference attack detection unit 140 notifies the security administrator terminal unit that an inference attack has occurred and provides reporting information regarding the corresponding event.

The inference attack detection unit 140 determines, in the same manner as in the previous example, that the inference attack transaction $\vec{t}_2$, which is input after $\vec{t}_1$, requires restriction. The inference attack detection unit 140 stores the determination as inference knowledge in the inference knowledge storage unit 150, and it also generates inference attack log information and stores it in the inference attack log storage unit 170. Furthermore, the inference attack detection unit 140 generates restriction request information for the inference attack transaction $\vec{t}_2$ and provides it to the inference attack control unit 160.

In addition, the inference attack detection unit 140 may output restriction request information, which requests that result data not constituting the inference attack logic be output without restriction, to the inference attack control unit 160.

The inference attack control unit 160 receives result data from the DBMSs 30 and restriction request information corresponding to each result data. If no inference attack element is requested to be restricted according to the received restriction request information, the corresponding result data is provided to the inquirer terminal unit via the input unit 10 without modification. Otherwise, the modified result data is provided to the inquirer terminal unit after restricting the data attribute corresponding to the inference attack element requested to be restricted.

The restriction may include masking or anonymizing the corresponding data attribute in the result data, or removing the corresponding data attribute from the result data.

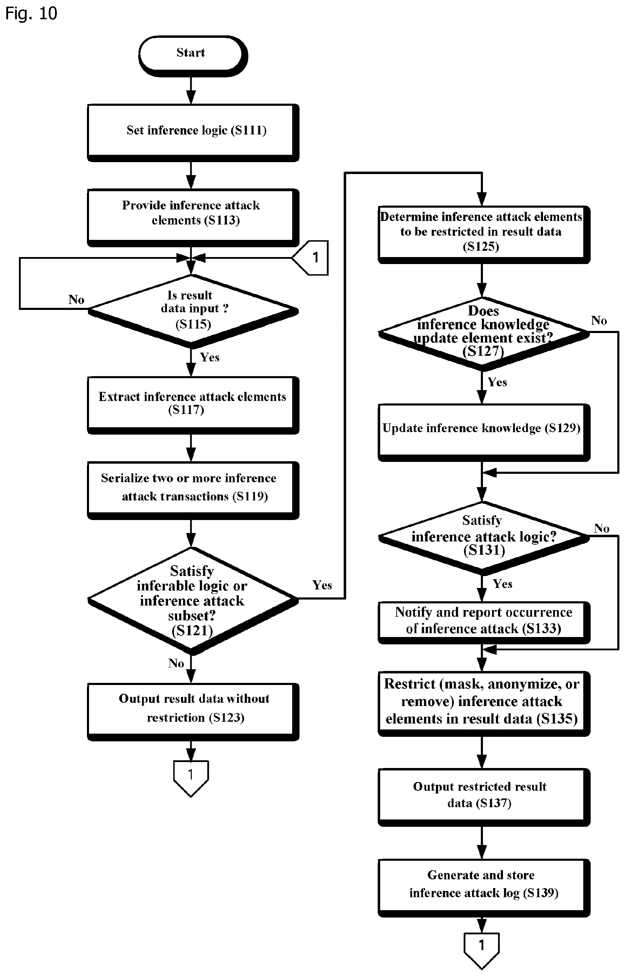

FIG. 10 is a flowchart illustrating a method of controlling DB inference attacks according to the present disclosure.

Referring to FIG. 10, the inference control unit 20 sets an inference logic by providing an inference logic setting interface to the security administrator terminal unit through the inference setting unit 110, and stores the set inference logic as inference knowledge in the inference knowledge storage unit 150 (S111). The inference logic setting includes setting the inference attack logic, inferable logic, expanded inference attack logic, inference attack element threshold $\rho$, multi-level risk level threshold $\sigma$, and inferable logic threshold $\tau$.

Once the inference logic is set, the inference control unit 20 generates inference attack elements based on the inference attack logic, inferable logic, and expanded inference attack logic generated by the inference attack element generation unit 230 of the inference setting unit 110. It then generates inference attack element information (E) for the generated inference attack elements and provides it to the inference attack element extraction units 120 (S113).

Once the inference logic and the inference attack elements are set, the inference control unit 20 monitors, through the inference attack element extraction units 120, whether result data is being input from DBMS 30 (S115).

When result data is input, the inference control unit 20 examines, through the inference attack element extraction units 120, whether each inference attack element from the predefined inference attack element information is included in the result data. If so, the inference control unit 20 extracts such inference attack elements, generates an inference attack transaction $t_{(u, p, q)}$ composed of the extracted inference attack elements, and outputs the generated transaction to the inference attack serialization unit 130 (S117).

When the inference attack transactions $t_{(u, p, q)}$ are input, the inference control unit 20, through the inference attack serialization unit 130, serializes the inference attack transactions $t_{(u, p, q)}$ received from the plurality of inference attack element extraction units 120 in ascending order based on the input time of result data, and outputs them to the inference attack detection unit 140 (S119).

The inference control unit 20, through the inference attack detection unit 140, examines whether the inference attack elements of the serialized inference attack transactions input from the inference attack serialization unit 130 satisfy any inferable logic or inference attack subset (S121). If the inference attack elements in the input inference attack transaction do not satisfy any inferable logic or inference attack subset, the inference attack detection unit 140 sends restriction request information to the inference attack control unit, requesting that the result data be output without restriction. The inference attack control unit 160 then provides the result data to the inquirer terminal unit without restriction (S123).

When the occurrence of an inference attack transaction satisfying any inferable logic or inference attack subset is detected, the inference control unit 20, through the inference attack detection unit 140, determines one or more inference attack elements corresponding to the threshold as the elements to be restricted, among the inference attack elements included in the transaction (S125). At this time, the inference attack detection unit 140 refers to the inference knowledge storage unit 150 to determine whether any of the inference attack elements to be restricted, as determined based on the threshold, have previously been restricted. If so, such previously restricted elements are determined as the inference attack elements to be restricted from the result data corresponding to the current inference attack transaction.

If an inference attack element to be restricted is determined, the inference control unit 20, through the inference attack detection unit 140, determines whether there is any inference knowledge update element-that is, any element that requires updating the inference knowledge (S127). In other words, the inference attack detection unit 140 checks whether there is any inference attack element that is subject to restriction or newly provided to the inquirer and thus needs to be reflected in the inference knowledge.

If there is a new inference attack element to be restricted or provided, the inference attack detection unit 140 stores such inference attack element as inference knowledge in the inference knowledge storage unit 150, thereby updating the inference knowledge (S129).

The inference attack detection unit 140 determines whether the previously detected inference attack elements and the inference attack elements of the input inference attack transaction satisfy any inference attack logic (S131). If it is determined that one or more inference attack logics are satisfied, the inference attack detection unit notifies the security administrator terminal unit that an inference attack has occurred, and provides reporting information on the details (S133).

The inference control unit 20, through the inference attack control unit 160, restricts the data attributes corresponding to the inference attack elements determined to be restricted, among the plurality of data attributes constituting the corresponding result data (S135).

The inference control unit 20 then provides the restricted result data, processed by the inference attack control unit 160, to the corresponding inquirer terminal unit via the input/output unit 10 (S137).

The inference attack control unit 160 generates an inference attack log including the results of the detection and the restriction of the inference attack, and stores the generated inference attack log in the inference attack log storage unit 170 (S139).

The foregoing embodiment describes, as an example, a single table including multiple records with seven data attributes, as shown in FIG. 4. However, it is evident that the inference attack control method according to the present disclosure can also be applied to result data that includes the outcome of querying a corresponding view (i.e., a virtual table in a DBMS), in cases where an inquirer accesses a view instead.

In addition, if the inquirer uses a query (e.g., ALTER, RENAME, SELECT AS, etc.) to change a data attribute name, it is desirable that the inference control unit 20, upon receiving the query through the input/output unit 10, provides the inference setting unit 110 with change information including the original data attribute name and the changed data attribute name corresponding thereto. The inference attack logics, inferable logics, and expanded inference attack logics are then updated in accordance with the changed data attribute name.

Specifically, the inference control unit 20 additionally generates or updates inference attack elements by adding or setting the changed data attribute name corresponding to the original data attribute name (S111). It also adds or updates the inference attack element information E and the multi-level risk table for each inference attack subset to reflect the newly generated or updated elements, and provides them with the inference attack element extraction units 120 (S113). Accordingly, the inference control unit 20 extracts inference attack elements corresponding to both the original and changed data attribute names from the result data, and detects inference attacks as previously described for the embodiment. Furthermore, if a query includes data attribute renaming through a stored procedure or trigger, the inference attack is similarly detected and controlled based on the inference attack elements corresponding to both the original and changed attribute names. Thus, it is evident that the inference attack control method according to the present disclosure can also be applied in the same manner when aliases for database objects such as tables, views, or procedures are used via a synonym or similar method.

Meanwhile, those having ordinary knowledge in the technical field of the present disclosure may easily understand that the present disclosure is not limited to the typical desirable embodiment described above but may be realized by various improvements, changes, substitutions or additions without departing from the scope of the present disclosure. If the embodiment by such improvement, change, substitution or addition falls within the scope of the appended claims, the technical idea thereof should be also construed as belonging to the present disclosure.

[Explanation of Symbols]

10: Input/output unit 20: Inference control unit
30: Database management system (DBMS)
40: Database (DB) 110: Inference setting unit
120: Inference attack element extraction unit 130: Inference attack serialization unit
140: Inference attack detection unit 150: Inference knowledge storage unit
160: Inference attack control unit 170: Inference attack log storage unit
210: Inference logic setting interface unit
220: Inference logic generation unit 221: Inference attack logic generation unit
222: Inferable logic generation unit 230: Inference attack element generation unit
240: Multi-level risk setting unit 250: Threshold setting unit

**Claims**

1. An apparatus for controlling database (DB) inference attacks, the apparatus comprising:

an input/output unit configured to receive queries from a plurality of inquirer terminal units and output the queries, receive result data in response to the received queries, and provide the result data to the corresponding inquirer terminal unit;
one or more database management systems (DBMSs) configured to access at least one database (DB) including a plurality of data attributes, wherein at least one DB includes sensitive data attributes designated as sensitive information to be protected, the one or more DBMSs being configured to search the DBs in response to the queries input from the input/output unit, and generate and output the corresponding result data; and
an inference control unit configured to establish inference knowledge including one or more inference logics, each of which comprises logical operations and inference attack elements corresponding to data attributes that can be used to infer sensitive information, detect inference attacks capable of inferring the sensitive information from result data received from the DBMS by referencing the inference logic, restrict at least one data attribute information corresponding to at least one inference attack element among the elements included in the result data in which an inference attack is detected, and transmit the restricted result data to the corresponding inquirer terminal unit via the input/output unit.

2. The apparatus of claim 1, wherein the inference control unit comprises:

an inference knowledge storage unit configured to store inference knowledge including one or more inference logics and inference attack elements corresponding to data attributes provided to an inquirer terminal unit;
an inference setting unit configured to receive, from a security manager via a security administrator terminal, at least one data attribute that can be used to infer sensitive information configured in the DB, generate an inference logic including the at least one data attribute, store the inference logic as inference knowledge in the inference knowledge storage unit, set the data attributes included in the inference logic as inference attack elements, and output inference attack element information including the set inference attack elements;
an inference attack element extraction unit configured to set the inference attack element information by receiving it from the inference setting unit, extract inference attack elements corresponding to the inference attack element information from result data received from the DBMSs, generate an inference attack transaction composed of the extracted inference attack elements, and output the generated inference attack transaction;
an inference attack detection unit configured to receive the inference attack transaction, detect an inference attack by examining whether inference attack elements included in the inference attack transaction and inference attack elements stored in the inference knowledge storage unit and previously provided to the inquirer terminal unit satisfy any one of the inference logics stored in the inference knowledge storage unit, and, upon detection of the inference attack, output restriction request information for at least one of the inference attack elements included in the corresponding inference attack transaction; and
an inference attack control unit configured to, when restriction request information is received from the inference attack detection unit, restrict at least one data attribute corresponding to at least one inference attack element included in the received restriction request information, among data attributes included in result data corresponding to an inference attack transaction in which the inference attack is detected, and provide the restricted result data to the corresponding inquirer terminal unit via the input/output unit.

3. The apparatus of claim 2, wherein the inference control unit further comprises an inference attack serialization unit configured to serialize a plurality of inference attack transactions received from the inference attack element extraction unit and output the serialized inference attack transactions, and
the inference attack detection unit is configured to detect an inference attack by the serialized inference attack transactions.

4. The apparatus of claim 2, wherein the inference setting unit comprises:

an inference logic generation unit configured to receive, from a security administrator via a security administrator terminal, at least one data attribute that can be used to infer the sensitive information configured in the DB, generate an inference logic including the received data attribute, and store the generated inference logic as inference knowledge in the inference knowledge storage unit; and
an inference attack element generation unit configured to set the data attributes included in the inference logic as inference attack elements and output the set inference attack elements.

5. The apparatus of claim 4, wherein the inference logic generation unit comprises:

an inference attack logic generation unit configured to receive, from a security manager via a security administrator terminal, at least one data attribute that is directly associated with the sensitive information configured in the DB and can be used to infer the sensitive information, generate an inference attack logic including the at least one data attribute as one of the inference logics, and store the generated inference attack logic in the inference knowledge storage unit; and
an inferable logic generation unit configured to receive at least one data attribute that can be used to increase the accuracy of inference attacks on the sensitive information, generate an inferable logic including the at least one data attribute, combine the inferable logic with the inference attack logic to generate an expanded inference attack logic, and store the expanded inference attack logic as inference knowledge in the inference knowledge storage unit.

6. The apparatus of claim 5, wherein the inference setting unit further comprises a multi-level risk setting unit configured to, upon receiving a multi-level risk setting request from a security administrator via a security administrator terminal unit, generate inference attack subsets by selecting one or more inference attack elements without duplication within each subset, provide the generated inference attack subsets to the security administrator, receive a risk level for each inference attack subset from the security administrator, set a risk level for each inference attack subset, and store the set risk levels as inference knowledge in the inference knowledge storage unit.

7. The apparatus of claim 6, wherein the inference setting unit further comprises a threshold setting unit configured to, upon receiving a threshold setting request from a security administrator terminal unit, receive an inference attack element threshold representing the number of inference attack elements to be restricted among the inference attack elements constituting the inference attack subset, and store the inference attack element threshold in the inference knowledge storage unit.

8. The apparatus of claim 7, wherein the threshold setting unit is further configured to, upon receiving the threshold setting request from a security administrator terminal unit, receive a risk level threshold representing a risk level at which the inference attack subset is to be restricted and set the received risk level threshold.

9. The apparatus of claim 7 or 8, wherein the threshold setting unit is further configured to, upon receiving the threshold setting request, set an inferable logic threshold representing the number of inference attack elements to be restricted among the inference attack elements included in the inferable logic.

10. The apparatus of claim 2, wherein the inference attack detection unit is configured to, when determining an inference attack element to be restricted, refer to the inference knowledge and determine at least one inference attack element to be restricted so that it is not provided to the inquirer terminal unit.

11. The apparatus of claim 2, wherein the inference attack control unit is configured to restrict the data attribute information corresponding to at least one inference attack element to be restricted in the result data by performing masking or anonymization of the data attribute information, or by removing the data attribute information from the result data.

12. A method of controlling database (DB) inference attacks, the method comprising:

a DB search process in which one or more database management systems (DBMSs), each managing at least one database (DB) including a plurality of data attributes, wherein at least one DB includes sensitive data attributes designated as sensitive information to be protected, perform a search in response to a query input to the DB, and generate and output result data; and
an inference control process in which an inference control unit establishes inference knowledge including one or more inference logics, each of which comprises logical operations and inference attack elements corresponding to data attributes that can be used to infer sensitive information, detects inference attacks capable of inferring the sensitive information from result data received from the DBMS by referencing the inference logic, restricts at least one data attribute information corresponding to at least one inference attack element among the elements included in the result data in which an inference attack is detected, and transmits the restricted result data to the corresponding inquirer terminal unit via an input/output unit.

13. The method of claim 12, wherein the inference control process comprises:

an inference setting step in which the inference control unit, through an inference setting unit, receives, from a security administrator, at least one data attribute that can be used to infer sensitive information configured in the DB, generates an inference logic including the at least one data attribute, stores the inference logic as inference knowledge in an inference knowledge storage unit, sets the data attributes included in the inference logic as inference attack elements, and outputs inference attack element information including the set inference attack elements;
an inference attack element extraction step in which the inference control unit sets the inference attack element information by receiving it from the inference setting unit, extracts inference attack elements corresponding to the inference attack element information from result data received from the DBMSs, generates an inference attack transaction composed of the extracted inference attack elements, and outputs the generated inference attack transaction;
an inference attack detection step in which the inference control unit, through an inference attack detection unit, receives the inference attack transaction, detects an inference attack by examining whether inference attack elements included in the inference attack transaction and inference attack elements stored in the inference knowledge storage unit and previously provided to the inquirer terminal unit satisfy any one of inference attack logics, inferable logics, or inference attack subsets stored in the inference knowledge storage unit, and, upon detection of the inference attack, outputs restriction request information for at least one of the inference attack elements included in the corresponding inference attack transaction; and

an inference attack control step in which, when the restriction request information is received from the inference attack detection unit, the inference control unit, through an inference attack control unit, restricts at least one data attribute corresponding to at least one inference attack element included in the received restriction request information, among data attributes included in result data corresponding to an inference attack transaction in which the inference attack is detected, and provides the restricted result data to the corresponding inquirer terminal unit via the input/output unit.

14. The method of claim 13, wherein the inference control process comprises an inference attack serialization step in which the inference control unit, through an inference attack serialization unit, serializes a plurality of inference attack transactions received from an inference attack element extraction unit and outputs the serialized inference attack transactions, and

in the inference attack control step, when the restriction request information is received from the inference attack detection unit, the inference attack control unit restricts a data attribute corresponding to an inference attack element included in the received restriction request information, among the data attributes included in the result data corresponding to the inference attack transaction for which an inference attack is detected, and provides the restricted result data to the corresponding inquirer terminal unit via the input/output unit.

15. The method of claim 13, wherein the inference setting step comprises an inference logic generation step in which the inference setting unit, through an inference logic generation unit, receives at least one data attribute that can be used to infer sensitive information configured in the DB from a security administrator, generates an inference logic including the at least one data attribute, and stores the generated inference logic as inference knowledge in the inference knowledge storage unit; and

an inference attack element generation step in which the inference setting unit, through an inference attack element generation unit, sets the data attributes included in the inference logic as inference attack elements, and outputs the inference attack elements.

16. The method of claim 15, wherein the inference logic generation comprises:

an inference attack logic generation step in which the inference logic generation unit, through an inference attack logic generation unit, receives at least one data attribute that is directly associated with the sensitive information configured in the DB and can be used to infer the sensitive information from the security administrator, generates an inference attack logic including the at least one data attribute as one of the inference logics, and stores the generated inference attack logic in the inference knowledge storage unit; and

an inferable logic generation step in which the inference logic generation unit, through an inferable logic generation unit, receives at least one data attribute that can be used to increase the accuracy of inference attacks on the sensitive information, generates an inferable logic including the at least one data attribute, combines the inferable logic with the inference attack logic to generate an expanded inference attack logic, and stores the expanded inference attack logic as the inference knowledge in the inference knowledge storage unit.

17. The method of claim 16, wherein the inference setting step further comprises a multi-level risk setting step in which, upon receiving a multi-level risk setting request from a security administrator via the security administrator terminal unit, the inference setting unit, through a multi-level risk setting unit, generates inference attack subsets by selecting one or more inference attack elements without duplication within each subset, provides the generated inference attack subsets to the security administrator, receives a risk level for each inference attack subset from the security administrator, sets the risk level for each inference attack subset, and stores the set risk levels as the inference knowledge in the inference knowledge storage unit.

18. The method of claim 17, wherein the inference setting step further comprises a threshold setting step in which, upon receiving a threshold setting request from the security administrator terminal unit, the inference setting unit, through a threshold setting unit, receives an inference attack element threshold representing the number of inference attack elements to be restricted among the inference attack elements constituting the inference attack subset, sets the received threshold, and stores the set threshold.

19. The method of claim 18, wherein, in the threshold setting step, upon receiving the threshold setting request from the security administrator terminal unit, the inference setting unit, through the threshold setting unit, further receives a risk level threshold representing a risk level at which the inference attack subset is to be restricted and sets the received risk level threshold.

20. The method of claim 18 or 19, wherein, in the threshold setting step, upon receiving the threshold setting request, the inference setting unit, through the threshold setting unit, further sets an inferable logic threshold representing the number of inference attack elements to be restricted among the inference attack elements included in the inferable logic.

21. The method of claim 13, wherein, in the inference attack detection step, when determining an inference attack element to be restricted, the inference attack control unit refers to the inference knowledge and determines at least one inference attack element such that it is not provided to the inquirer terminal unit.

22. The method of claim 13, wherein, in the inference attack control step, the inference attack control unit restricts the data attribute information corresponding to at least one inference attack element to be restricted in the result data by performing masking or anonymization of the data attribute information, or by removing the data attribute information from the result data.

Fig. 1

Fig. 2

EP 4 664 331 A1

Fig. 2

Fig. 3

110

Security administrator

DBMS

210

Inference logic setting interface unit

230    221    220    222    240    250

Inference
attack
element
generation
unit

Inference
attack
logic
generation
unit

Inferable
logic
generation
unit

Multi-level
risk setting
unit

Threshold
setting unit

Inference logic
generation
unit

Inference attack
element information

Inference attack
element extraction unit

Inference attack detection unit or
inference knowledge storage unit

Fig. 4

EP 4 664 331 A1

**401**

| NO | patient | age | addr | zip code | treatment | surgery | cancer |
|---|---|---|---|---|---|---|---|
| 1 | James | 26 | Seattle, WA | 98101 | immunotherapy | tumor removal | liver |
| 2 | Alex | 33 | Los Angeles, CA | 90011 | rehabilitation therapy | fracture surgery | |
| 3 | Carl | 57 | Los Angeles, CA | 90011 | respiratory therapy | | |
| 4 | Emily | 21 | Los Angeles, CA | 90011 | | tumor removal | |
| 5 | John | 35 | San Francisco, CA | 94102 | immunotherapy | tumor removal | liver |
| 6 | Mark | 45 | San Francisco, CA | 94102 | respiratory therapy | fracture surgery | |
| 7 | Rebecca | 35 | San Francisco, CA | 94102 | | tumor removal | |
| 8 | Susan | 50 | San Francisco, CA | 94102 | immunotherapy | tumor removal | lung |
| 9 | Elizabeth | 45 | Seattle, WA | 98101 | immunotherapy | tumor removal | stomach |
| 10 | Oliver | 26 | Seattle, WA | 98101 | immunotherapy | | |
| 11 | Benjamin | 45 | Seattle, WA | 98101 | | tumor removal | |
| 12 | Sophia | 50 | Seattle, WA | 98101 | immunotherapy | tumor removal | lung |

Fig. 5

**501**

| | |
|---|---|
| | ⋮ |
| $\alpha_w$ | patient(Z) ∧ treatment(X) ∧ surgery(Y) |
| $\alpha_x$ | treatment(X) ∧ surgery(Y) |
| | ⋮ |

**502**

| | |
|---|---|
| | ⋮ |
| $c_x$ | age(A) ∧ addr(B) |
| | ⋮ |

**503**

| | |
|---|---|
| | ⋮ |
| $\alpha_w$ | patient(Z) ∧ age(A) ∧ addr(B) ∧ treatment(X) ∧ surgery(Y) |
| $\alpha_x$ | age(A) ∧ addr(B) ∧ treatment(X) ∧ surgery(Y) |
| | ⋮ |

Fig. 6

| | |
|---|---|
| 1 | **patient** |
| 2 | **age** |
| 3 | **addr** |
| | ⋮ |
| *i* | **treatment** |
| | ⋮ |
| *j* | **surgery** |
| | ⋮ |

Fig. 7

| | Inference attack subset $(S_x)$ | Risk level $(V_x)$ |
|---|---|---|
| 1 | $\{e_2\}$ | low |
| 2 | $\{e_3\}$ | low |
| 3 | $\{e_2, e_3\}$ | medium |
| 4 | $\{e_1, e_i\}$ | high |
| 5 | $\{e_1, e_j\}$ | high |
| 6 | $\{e_i, e_j\}$ | critical |
| ⋮ | ⋮ | ⋮ |

Fig. 8

Fig. 9

Fig. 10

```
                        ┌─────────────┐
                        │    Start    │
                        └──────┬──────┘
                               ▼
                   ┌───────────────────────┐
                   │ Set inference logic (S111) │
                   └───────────┬───────────┘
                               ▼
                   ┌───────────────────────┐
                   │  Provide inference attack  │
                   │     elements (S113)    │
                   └───────────┬───────────┘
                               ▼                      ⟨1⟩
                       ╱─────────────╲
         No ◄─────────┤  Is result    ├
                       │ data input ? │
                       │    (S115)    │
                       ╲─────────────╱
                              │ Yes
                              ▼
                   ┌───────────────────────┐
                   │ Extract inference attack elements │
                   │        (S117)        │
                   └───────────┬───────────┘
                               ▼
                   ┌───────────────────────┐
                   │ Serialize two or more inference │
                   │ attack transactions (S119) │
                   └───────────┬───────────┘
                               ▼
                       ╱─────────────╲
                      │    Satisfy    │
                      │ inferable logic or │  Yes
                      │ inference attack  ├──────►
                      │    subset?    │
                      │    (S121)    │
                       ╲─────────────╱
                              │ No
                              ▼
                   ┌───────────────────────┐
                   │ Output result data without │
                   │   restriction (S123)   │
                   └───────────┬───────────┘
                               ▼
                             ⟨1⟩
```

```
                   ┌───────────────────────┐
                   │ Determine inference attack elements │
                   │  to be restricted in result data │
                   │        (S125)        │
                   └───────────┬───────────┘
                               ▼
                       ╱─────────────╲
                      │     Does      │   No
                      │ inference knowledge ├──────►
                      │ update element exist? │
                      │    (S127)    │
                       ╲─────────────╱
                              │ Yes
                              ▼
                   ┌───────────────────────┐
                   │ Update inference knowledge (S129) │
                   └───────────┬───────────┘
                               ▼
                       ╱─────────────╲
                      │    Satisfy    │   No
                      │ inference attack logic? ├──────►
                      │    (S131)    │
                       ╲─────────────╱
                              │ Yes
                              ▼
                   ┌───────────────────────┐
                   │ Notify and report occurrence │
                   │ of inference attack (S133) │
                   └───────────┬───────────┘
                               ▼
                   ┌───────────────────────┐
                   │ Restrict (mask, anonymize, or │
                   │ remove) inference attack │
                   │ elements in result data (S135) │
                   └───────────┬───────────┘
                               ▼
                   ┌───────────────────────┐
                   │ Output restricted result │
                   │      data (S137)      │
                   └───────────┬───────────┘
                               ▼
                   ┌───────────────────────┐
                   │   Generate and store   │
                   │ inference attack log (S139) │
                   └───────────┬───────────┘
                               ▼
                             ⟨1⟩
```

## INTERNATIONAL SEARCH REPORT

| International application No. |
| --- |
| **PCT/KR2024/095078** |

| A. | CLASSIFICATION OF SUBJECT MATTER |
| --- | --- |

**G06F 21/55**(2013.01)i; **G06F 21/62**(2013.01)i; **G06F 21/57**(2013.01)i; **G06N 5/04**(2006.01)i

According to International Patent Classification (IPC) or to both national classification and IPC

| B. | FIELDS SEARCHED |
| --- | --- |

Minimum documentation searched (classification system followed by classification symbols)

G06F 21/55(2013.01); G06F 17/30(2006.01); G06F 21/57(2013.01); G06F 21/60(2013.01); G06F 21/62(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 추론공격(inference attack), 데이터베이스(database), 프라이버시 (privacy), 데이터베이스(database), 쿼리(query)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-1859636 B1 (DIGITALZ CO., LTD.) 21 May 2018 (2018-05-21)<br>See paragraphs [0006] and [0050]; and claim 1. | 1-22 |
| A | TURKANOVIC, Muhamed et al. Inference Attacks and Control on Database Structures. TEM Journal. Volume 4, Number 1, 2015.<br>See pages 4-5 and 8. | 1-22 |
| A | KR 10-2018-0097760 A (SAMSUNG ELECTRONICS CO., LTD.) 31 August 2018 (2018-08-31)<br>See paragraphs [0032], [0040], [0049]-[0050] and [0073]. | 1-22 |
| A | KR 10-1069367 B1 (PNPSECURE INC.) 04 October 2011 (2011-10-04)<br>See paragraphs [0008] and [0012]-[0014]. | 1-22 |
| A | KR 10-2017-0053056 A (KIM, Hae Ri et al.) 15 May 2017 (2017-05-15)<br>See paragraph [0013]. | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 May 2024** | **02 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095078**

| Patent document cited in search report | | | Publication date (day/month/year) | Patent family member(s) | | | Publication date (day/month/year) |
|---|---|---|---|---|---|---|---|
| KR | 10-1859636 | B1 | 21 May 2018 | None | | | |
| KR | 10-2018-0097760 | A | 31 August 2018 | CN | 108475321 | A | 31 August 2018 |
| | | | | CN | 108475321 | B | 27 May 2022 |
| | | | | EP | 3378009 | A1 | 26 September 2018 |
| | | | | EP | 3378009 | B1 | 29 December 2021 |
| | | | | KR | 10-2154739 | B1 | 10 September 2020 |
| | | | | US | 11087024 | B2 | 10 August 2021 |
| | | | | US | 2017-0220817 | A1 | 03 August 2017 |
| | | | | WO | 2017-131300 | A1 | 03 August 2017 |
| KR | 10-1069367 | B1 | 04 October 2011 | None | | | |
| KR | 10-2017-0053056 | A | 15 May 2017 | KR | 10-2375973 | B1 | 17 March 2022 |

Form PCT/ISA/210 (patent family annex) (July 2022)